# EUROPEAN PATENT APPLICATION

(11) **EP 3 205 485 A1**
(43) Date of publication of application: **16.08.2017**
(21) Application number: 17155684.8
(22) Date of filing: 10.02.2017
(51) Int. Cl.: B29C 67/24, B29C 33/38, B29C 45/76

(54) **METHOD TO MAKE A CURVED ELEMENT**

(30) Priority: 12.02.2016 IT UB20160711
(71) Applicant: L.I.C.AR. International S.p.A., 33080 San Quirino (PN) (IT)
(72) Inventor: Nadalutti, Giorgio, 33040 Corno di Rosazzo (UD) (IT)
(74) Representative: Petraz, Gilberto Luigi

(57) **Abstract**

Method to make an element (10) that has at least one curved portion (100), and a base body with a surface finish. The element (10) is associable with linear elements (14) to make a panel and/or a furnishing component.

## Description

### FIELD OF THE INVENTION

The present invention concerns a method to make a curved element of a furnishing component, for example frames, wall units, chests of drawers, bedside tables, doors, wardrobes, or containers in general, used for furniture or fittings, for domestic or office furniture or other.

The invention also concerns the curved element for furnishing components thus obtained.

### BACKGROUND OF THE INVENTION

It is known to use curved elements, possibly in association with linear elements, to make furnishing components, for example as the end part of a kitchen unit, or chest of drawers or container for bedrooms, sitting rooms or office furniture.

To give greater esthetic value to the furnishing component, the curved elements and linear elements can have a decorative surface pattern, for example reproducing a finish that is typical of brushed wood, or other natural or reproduced wood.

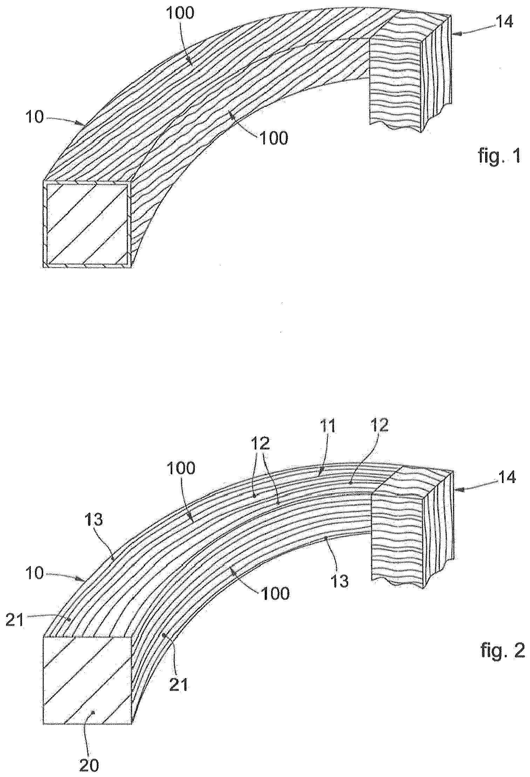

It is known that normally, if they are not obtained with curved precious wood, the curved elements are ennobled by applying a covering sheet of cellulose or plastic material onto the base material, which in this case can normally be a poor material, deriving from wood or other, for example MDF (Medium Fiber Density), HDF (High Fiber Density) or chipboard. However, it can happen that the resultant surface finish of the curved elements, in particular if and when they are combined with the linear elements, is not acceptable because the grains carried on the ennobling sheet do not follow the curve of the curved element, as they are linear (see fig. 1).

Another alternative is to make the curved element by gluing various layers of wood material (such as for example Ayus) suitable for making curved profiles (multilayer technique) and then working the surface using a computer numerical control working.

In any case, this technique does not obtain a surface that is a faithful reproduction of the combined linear elements.

Document US 2011/0146175 describes a method to make building products that reproduce the natural surface pattern of a rock or stone or wood, and that are made of light materials, economical and not bulky.

This method provides to acquire an image of a natural surface pattern and to use it as such, that is, without processing it to adapt the image to the particular curves of the building product, to obtain a mold to make the building product.

Document US 3,907,624 describes a method to make an edge of a panel in which the decorative element of the edge is obtained by casting, in a mold, a plastic material into a suitable seating made on the panel.

One purpose of the present invention is to perfect a method to make a curved element for furnishing components that has a homogeneous surface finish of false wood, or other decorative patterns, which follows the curve of the curved element, improving its esthetic value, enhancing the value of the product and reproducing as faithfully as possible the esthetic effect of a natural product.

Another purpose of the present invention is to perfect a method to make a curved element that allows to obtain the desired surface finish on the curved element, which finish is then protected and decorated using known techniques.

Another purpose of the present invention is to be able to use a low-cost basic material, considerably reducing the supply costs.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, the present invention concerns a method to make an element having at least one curved portion, wherein the element with curved portion has a base body with a surface finish and is associable with linear elements to make a panel and/or a furnishing component.

According to one aspect of the present invention, the method comprises at least the following steps:
- three-dimensional acquisition of an image of a decorative portion to be applied on at least a surface face of the element that is to be enhanced;
- graphic processing of the image of the decorative portion to confer on it a curved development coherent with the curved portion of the element;
- application of the processing of the image of the decorative portion on a three-dimensional model that reproduces at least one part of the curved portion and defining at least a surface face;
- making a mold, having a casting cavity, that uses the three-dimensional model that comprises the surface face and reproduces in negative, on at least one of its walls, the surface finish to be obtained;
- injecting an expanding substance into the casting cavity that, once expanded, goes to make up the base material, with a decorative surface pattern, of the element in order to obtain the curved portion of the element;
- extracting the curved portion of the element from the mold;
- possible application of a layer of protection, and possible decoration, on at least one surface face of the element.

Advantageously, the invention renders it possible to make an element having at least a curved portion, which can be produced in series, reproducing the desired decorative pattern on the surface, in a single piece and at low cost, without needing to carry out any subsequent assembly operations, or expensive workings on a single piece, and which is coherent and conforms to a possible linear element that has the same, or similar surface finish.

In particular, the graphic processing of the image allows to reproduce any desired pattern, such as lines, grains and esthetic finish, which can thus create esthetic continuity with the coverings of the flat parts of the furnishing element, which is generally not possible with normal covering methods.

In another variant embodiment the expanding substance is a polyurethane that can be expanded to the desired degree, so as to adhere perfectly to the walls of the mold, reproducing, once extracted from the mold, the pattern of the decorative portion.

Advantageously, the base material with which the element is made has a specific weight comparable to the specific weight of the elements made of wood, and less than wood substitutes which complete the finished appearance.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a perspective view of an element with at least a curved portion, associated with a completion element to generate the semi-finished or finished product, decorated according to the state of the art;
- fig. 2 is a schematic representation of an element with at least a curved portion, associated with a completion element, having at least a surface face enhanced according to the invention;
- fig. 3 is a section in perspective of a mold used in the method according to the present invention;
- fig. 4 is a section view of the mold in fig. 3 in another operating step;
- fig. 5 is a section view of the mold in fig. 3 with the element having at least a curved portion made therein.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

With reference to the attached drawings, the present invention concerns a method to make an element 10 having at least one curved portion 100, usable for a furnishing component whether it is a piece of furniture, a shelf, a door or other. The element 10 is therefore mainly a component associable with a completion element, but can also be a panel, or any finished product.

The element 10 has a base body with a surface finish and can be associated with completion elements, such as linear elements 14, to make pieces of furniture, furniture components or other.

The method comprises a first step in which an image is acquired three dimensionally that reproduces the desired surface finish to be obtained, for example by using a scanner able to acquire three dimensional images, of a decorative portion 11 present on a support, not shown.

The decorative portion 11 can, for example, reproduce any desired decorative pattern, such as a type of wood, reproducing the natural pattern, or other chosen for the purpose.

In the case of wood it can for example reproduce the grains of the wood, or another decoration 12, in bas relief or in high relief.

According to one aspect of the present invention, the method provides a second step in which a graphic processing occurs, in a known way and with known instruments, of the image of the decorative portion 11 in order to render the image of the decorative portion 11 coherent with the curved development of the curved portion 100 that the element 10 to be enhanced must possess.

Merely by way of example, it is possible to use a graphic software able to process images comprising broken lines, or with shading, or in rendering format, and processed to follow the development of the curved portion 100 of the element 10.

This process of graphic processing of the image is extremely important and characterizes the present invention, in that it allows to possibly process lines, patterns, or other of the image acquired so that, for example, it adapts to the surface esthetics of the flat parts of the furnishing element, thus allowing to obtain an esthetic continuity generally not attainable with traditional methods.

The method also comprises a third step that provides the application of the image of the decorative portion 11 processed on a three-dimensional model.

The three-dimensional model reproduces at least one part of the curved portion 100 and allows, as explained hereinafter, to spread the image of the decorative portion 11, after this has been processed in a desired way, on the surface face 13 defined on the element 10.

In this way, the decoration 12 follows the development of the three-dimensional model of the element 10, in correspondence with the surface face 13 chosen for the purpose, or another distribution that allows to obtain the desired esthetic result (fig. 2).

For example, the decoration 12 can be distributed to be able to obtain an element 10 in harmony with the other elements of a panel, for example also with the linear elements 14.

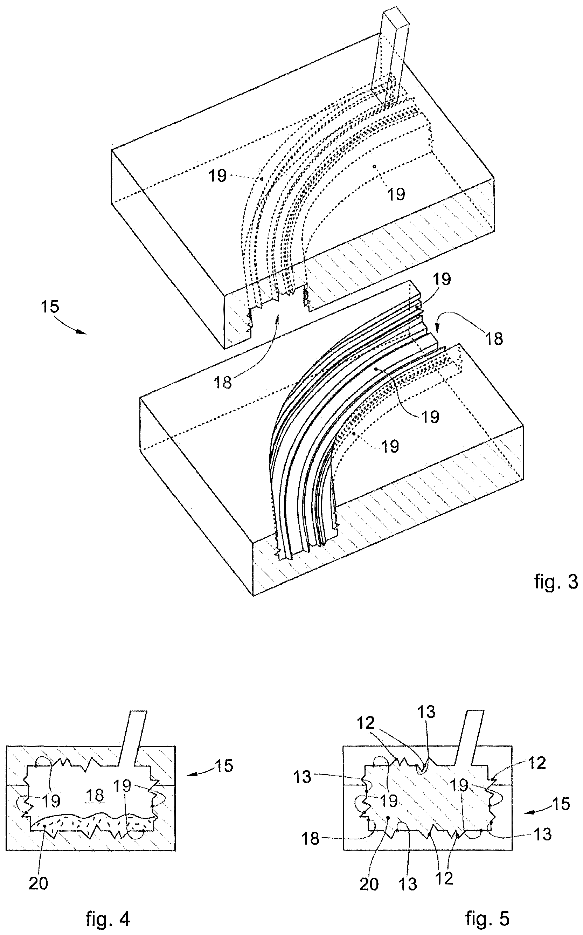

The method also comprises a step that provides to make a mold 15 using the three-dimensional model of the element 10 (fig. 3).

The mold 15 has, on one or more of its internal walls 19, the reproduction in negative of the at least one surface face 13 of the element 10 according to the image of the decorative portion 11 processed (fig.3).

The mold 15 is configured to define a casting cavity 18 in which base material of the element 10 is cast or injected, so that the base material goes to occupy all the free spaces of the casting cavity 18.

According to the invention, therefore, as described above, the casting cavity 18 has, on at least one wall 19, a surface finish that has ridges and hollows that reproduce in negative the surface face 13 that the element 10 must have.

In a variant embodiment, the casting cavity 18 is defined by a single volume to make the element 10 in a single piece.

In other variant embodiments, the casting cavity 18 can have grooves, hollows, or undercuts depending on the requirements of the finished appearance to be achieved.

The working of the at least one internal wall of the mold 15 can be obtained by using electro-erosion or laser erosion to obtain the desired surface finish, also comprising reliefs and hollows. The whole determines great accuracy of the surface finish to be obtained, and in any case such as to reproduce the real grain of the wood, or the decorations 12.

The method then provides a fifth step that consists of injecting or casting inside the mold 15 an expanding substance 20 that constitutes the base material of the element 10 in order to obtain at least the curved portion 100 (fig. 4).

In this way, once the expanding substance 20 has polymerized, it goes to occupy all the spaces and assumes the shape of the casting cavity 18, corresponding to the shape of the element 10 to be obtained. In this way, thanks to the adhesion of the expanding substance 20 to the internal walls of the casting cavity 18, at least one surface face 13 assumes the desired surface finish, reproduced in negative on the at least one wall 19 of the casting cavity 18 (fig. 5).

According to a variant embodiment, the expanding substance 20 can be polyurethane (PU).

According to another variant embodiment, the expanding substance 20 can be chosen, for example, from a group consisting of polyisocyanurates, polyesters, polyphenols and nylon 6.

In another variant embodiment the injection of the expanding substance 20 can be assisted with gas.

In another variant embodiment, the injection of the expanding substance 20 can occur at high pressure. For example, the molding technology used can be RIM (Reaction Injection Molding). Advantageously, it is possible to obtain a resistant and light element 10 that can be subjected to subsequent finishing workings.

For example, other molding technologies can be applied, such as hand molding, or other productive types.

In another variant embodiment, immediately before the expanding substance 20 is injected, it can be provided to lay glass fiber, or aramid fibers, or carbon fiber inside the casting cavity 18.

The method also provides a sixth step in which the curved portion 100 is extracted from the mold 15.

The method provides a seventh step for the possible application of a layer of protection, and possible decoration, on the enhanced surface face 13 of the element 10.

For example, this step can provide the application of a layer of varnish, an acrylic lacquer or to make a surface finish with ink or glaze printing.

It is clear that modifications and/or additions of parts may be made to the element 10 as described heretofore, without departing from the field and scope of the present invention.

It is also clear that, although the present invention has been described with reference to some specific examples, a person of skill in the art shall certainly be able to achieve many other equivalent forms of an element 10, having the characteristics as set forth in the claims and hence all coming within the field of protection defined thereby.

## Claims

1. Method to make an element (10) having at least one curved portion (100), wherein said element (10) with said at least one curved portion (100) has a base body with a surface finish and is associable with linear elements (14) to make a panel and/or a furnishing component, **characterized in that** it comprises at least the following steps:
- three-dimensional acquisition of an image of a decorative portion (11);
- graphic processing of the image of said decorative portion (11) to confer on said image a curved development coherent with said at least one curved portion (100) of said element (10);
- application of the processing of said image of said decorative portion (11) on a three-dimensional model reproducing at least one part of said curved portion (100) and defining at least a surface face (13);
- making a mold (15), having a casting cavity (18), using said three-dimensional model comprising said at least one surface face (13) and reproducing in negative, on at least one wall (19) of said casting cavity (18), the surface finish to be obtained;
- injecting an expanding substance (20) into said casting cavity (18) of said mold (15), said expanding substance (20) constituting the base material of said element (10) to obtain said at least one curved portion (100) of said element (10);
- extracting said at least one curved portion (100) of said element (10) from said mold (15);
- possible application of a layer of protection, and possible decoration, on said at least one surface face (13) of said element (10).

2. Method as in claim 1, **characterized in that** the injection into said mold (15) of said expanding substance (20) occurs at high pressure, using Reaction Injection Molding (RIM).

3. Method as in claim 1, **characterized in that** the injection into said mold (15) of said expanding substance (20) occurs at high pressure, using gas assisted injection molding.

4. Method as in any claim hereinbefore, **characterized in that** said expanding substance (20) injected into said mold (15) is polyurethane (PU).

5. Method as in any of the claims from 1 to 3, **characterized in that** said expanding substance (20) injected into said mold (15) is chosen from a group consisting of polyisocyanurates, polyesters, polyepoxides and nylon 6.

6. Method as in any claim hereinbefore, **characterized in that** it provides the laying of glass fibers, or aramid fibers, or carbon fibers inside said casting cavity (18) of said mold (15).

7. Method as in any claim hereinbefore, **characterized in that** the possible application of said layer of protection occurs by means of a layer of varnish, an acrylic lacquering or by making a surface finish with ink or glaze printing.

8. Element (10) to make at least partly curved furnishing components using a method as in any of the claims hereinbefore, said element (10) having at least a curved portion (100) and comprising a base body with a surface finish, **characterized in that** said base body is made in a mold (15) starting from an expanding substance (20), said base body having at least a surface face (13) with a surface finish obtained by the adhesion on at least one wall (19) of a casting cavity (18) of said mold (15).
